# FASCICULE DE BREVET EUROPEEN

(11) **EP 2 780 149 B1**
(45) Date de publication et mention de la délivrance du brevet: **13.05.2020**
(21) Numéro de dépôt: 12795519.3
(22) Date de dépôt: 12.11.2012
(51) Int. Cl.: B29C 51/16, B29K 311/08, B29C 51/14, B29C 51/10, B29C 51/26, B29L 31/00

(54) **PROCÉDÉ DE FABRICATION D'UNE PIÈCE RIGIDE REVÊTUE AU MOINS PARTIELLEMENT PAR UN REVÊTEMENT EN CUIR NATUREL**
VERFAHREN ZUR HERSTELLUNG EINES STARREN TEILS MIT WENIGSTENS TEILWEISER BESCHICHTUNG MIT EINER NATÜRLICHEN LEDERBESCHICHTUNG
METHOD OF PRODUCING A RIGID PART AT LEAST PARTIALLY COATED WITH A NATURAL LEATHER COATING

(30) Priorité: 14.11.2011 FR 1103449
(43) Date de publication de la demande: 24.09.2014
(73) Titulaire: Atelier Pras, Saint-Denis (FR)
(72) Inventeur: BADOUAL, Aurélie, 94300 Vincennes (FR); GAUTHIER, Jacques, 75012 Paris (FR)
(74) Mandataire: IP Trust
(86) Numéro de dépôt international: PCT/FR2012/052596
(87) Numéro de publication internationale: WO 2013/072608

(56) Documents cités:
- DE-A1- 4 211 077
- FR-A- 1 441 327
- JP-A- H05 200 873
- US-B1- 6 440 353
- US-B1- 6 685 789

## Description

### Domaine de l'invention

La présente invention concerne le domaine de la fabrication de pièces rigides présentant une surface décorative en cuir naturel.

### Etat de la technique

On connaît dans l'art antérieur un procédé de thermoformage d'un complexe formé par une feuille thermoplastique et un revêtement en cuir naturel textile, décrit dans le brevet allemand DE4211077. Ce document décrit un procédé consistant à associer un matériau thermoplastique et une feuille décorative, à chauffer l'ensemble à une température comprise entre 50 et 250 degrés et à appliquer une dépression comprise entre 0,4 et 1 bar, pendant une durée comprise entre 10 secondes et 2,5 minutes.

On connaît également le brevet français FR2933894 décrivant un procédé de fabrication d'une pièce telle qu'un élément de fauteuil. Ce brevet présente un procédé de réalisation d'une pièce en matière plastique revêtue au moins partiellement de cuir, pour véhicule automobile, caractérisé en ce qu'elle est obtenue par thermo-compression d'une plaque en matière plastique sur laquelle est préalablement rapportée une feuille de cuir.

On connaît aussi le brevet américain US6685789 (brevet européen EP0793570), qui décrit un procédé de fabrication d'une pièce formée par une matière thermoplastique doublée par une bande de doublure déformable.

Ce procédé consiste à introduire avant l'opération de thermoformage une bande de doublure déformable dans l'espace compris entre la pièce thermoformable et le moule d'emboutissage.

La bande de doublure, pour reprendre la terminologie du brevet européen, est constituée d'un matériau qui s'étend dans les conditions de dépression et de température du thermoformage et/ou qui est déformable selon deux dimensions par son maillage ou son changement de position. Les conditions de dépression génèrent une pression d'appui de façon à ce que la plaque de matière plastique et la doublure se lient par inclusion ou fusion. La pression d'appui appliquée par le moule est augmentée par un apport supplémentaire d'air comprimé. La bande de doublure est amenée par un système de rouleaux.

On connaît également le brevet français FR1441327 concernant un procédé pour fabriquer une matière plastique renforcée d'une étoffe stratifiée et mise en forme simultanément un objet avec cette matière stratifiée.

Pour fabriquer un objet de la façon indiquée dans ce document de l'art antérieur, on place l'étoffe sur le moule dans un état libre et sans aucune contrainte de sorte que cette étoffe peut être allongée beaucoup plus qu'il n'aurait été possible si l'étoffe avait été préalablement stratifiée sur la matière plastique.

Ce procédé de stratification et de mise en forme simultanées d'une feuille de matière plastique et d'une couche de renfort permet de produire un objet en matière plastique renforcée. Il consiste à enduire au moins une face de la couche de renfort avec une colle, à disposer une feuille continue de matière plastique en regard et en position adjacente à la face enduite de la couche de renfort, à placer la feuille de matière plastique et la couche de renfort, dont la dernière au moins est dans un état non tendu, en rapport de moulage sur un moule, à mettre en forme la matière plastique et la couche de support par application contre les parois du moule en vue d'une opération simultanée de stratification des deux éléments et de mise en forme du stratifié.

### Inconvénients de l'état de la technique

Les solutions proposées dans l'état de la technique ne sont pas totalement satisfaisantes, en particulier pour la réalisation de pièces revêtues en cuir naturel, et préférentiellement de cuir « pleine fleur», ou encore de croûte de cuir, notamment de croûte de cuir refendu.

Ces procédés sont adaptés pour la réalisation de pièces dont le substrat est une mousse ou un matériau thermo compressible dont les qualités mécaniques, notamment de rigidité, sont limitées.

Par ailleurs, ces procédés sont adaptés à des surfaces relativement simples, mais ne permettent pas de réaliser des pièces présentant des détails décoratifs et des configurations formées de reliefs complexes et des niveaux de finition élevées, telles que requis pour des articles de luxe par exemple.

Pus particulièrement, les solutions de l'art antérieur ne sont pas adaptées à la réalisation de pièces revêtues de cuir naturel.

Le cuir est une matière naturelle, d'origine animale (chaque peau est unique), avec une souplesse, une porosité et une élasticité intrinsèque, une fois la peau tannée, plus particulièrement au chrome. La matière première est de dimension non standardisée. Elle est délicate et coûteuse, il faut veiller à ce qu'il y ait le moins de chutes possibles. Il faut donc veiller à la fixer directement au moule, dans une optimisant la dimension de "surface utile" donc à +/- 2 cm de la distance de découpe de la pièce finale.

La solution proposée dans le brevet américain, ils évoquent le fait que le décor puisse être pris dans un cadre particulier, donc avec une dimension de décor standardisée, et dont l'importance des chutes générées après découpe n'est pas une priorité.

La matière doit être fixée manuellement à chaque thermoformage sans possibilité de préparation en amont, avec un transport par un système de roulements comme proposé dans le brevet américain US6685789.

Le cuir naturel est une matière plus ou moins homogène dans son épaisseur et son élasticité. Il est très important qu'elle soit fixée fermement et de manière tendue. Le brevet américain US6685789 propose, au contraire, dans une de ses variantes, un système des ressorts pour "accompagner" la déformation. Cela ne permet pas un positionnement précis du revêtement en cuir naturel par rapport à la surface thermoplastique, notamment dans le cas où le cuir est ajouré dans le but d'un décor intégrant la matière plastique. Ce motif doit être placé très précisément sur la forme du moule. S'il y a une souplesse dans les fixations, le placement du motif ne sera pas précis.

Le préchauffage du revêtement en cuir naturel proposé dans les solutions de l'art antérieur est totalement antinomique avec la préservation de l'apparence et des qualités du cuir.

### Solution apportée par l'invention.

Afin de remédier aux inconvénients des procédés de l'art antérieur, la présente invention concerne, selon son acception la plus générale, un procédé de fabrication d'une pièce rigide revêtue au moins partiellement par un revêtement en cuir naturel, conforme à la revendication 1, complétée ou non par les caractéristiques optionnelles faisant l'objet des revendications dépendantes de la revendication 1.

La présente divulgation concerne également une pièce rigide présentant un revêtement en cuir naturel souple en cuir naturel réalisé selon le procédé susvisé, ainsi qu'un moule pour la mise en œuvre du procédé.

### Description détaillée d'un exemple non limitatif de l'invention

La présente invention sera mieux comprise à la lecture de la description qui suit, concernant un exemple non limitatif de réalisation de l'invention et se référant aux dessins annexés où :

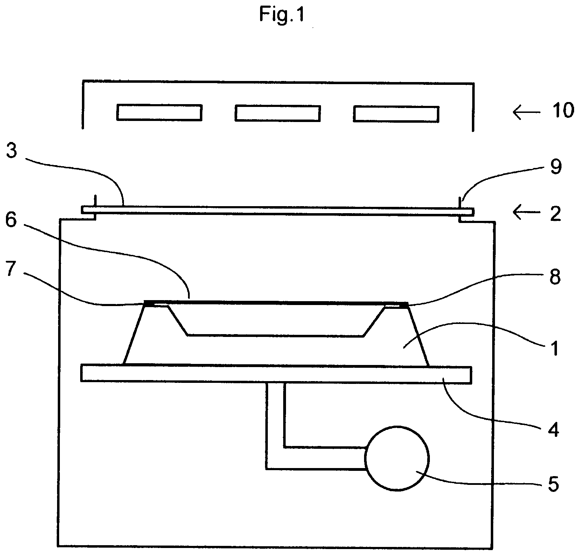

- la figure 1 représente une vue schématique d'une installation pour la mise en œuvre de l'invention, lors de l'étape de chauffage de la feuille thermoplastique

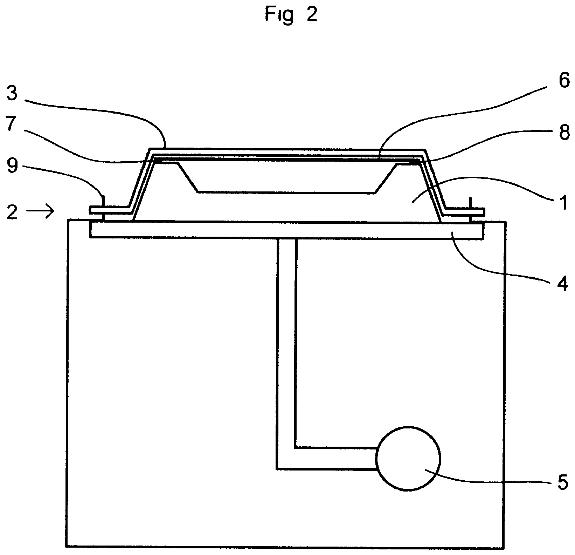

- la figure 2 représente une vue schématique d'une installation pour la mise en œuvre de l'invention, lors de l'étape de rapprochement de la feuille thermoplastique et du revêtement en cuir naturel

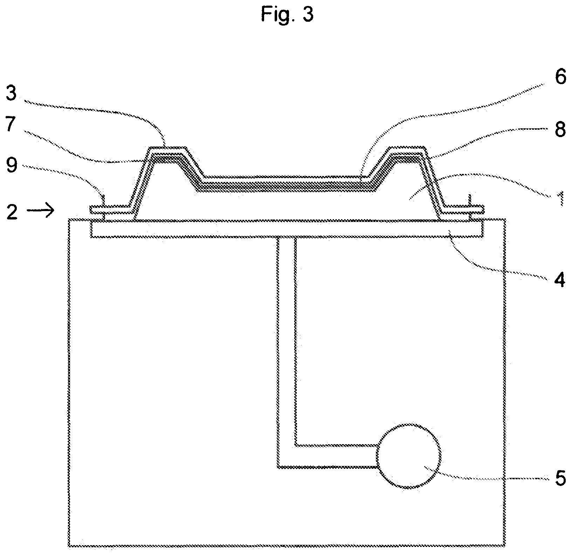

- la figure 3 représente une vue schématique d'une installation pour la mise en œuvre de l'invention, lors de l'étape de mise en dépression
- la figure 4 représente une vue en coupe partielle d'une installation pour la mise en œuvre du procédé.

Un exemple de mise en œuvre de l'invention sera exposé dans ce qui suit, en se référant aux dessins 1 à 3 concernant trois étapes consécutives de la fabrication.

L'installation comporte :
- un moule (1)
- Un support (2) de la feuille thermoplastique (3)
- un appareil de chauffage (10).

Le moule (1) présente une empreinte dont la configuration correspond à l'état de surface souhaité pour la pièce à réaliser. Le moule est un moule en aluminium présentant une surface usinée en commande numérique, de manière connue, ou par microgravure chimique, ou tout autre procédé habituel. Les reliefs peuvent présenter des configurations fines, avec des rayons de courbure inférieurs à l'épaisseur du revêtement en cuir naturel, pour des applications nécessitant des détails fins, par exemple la formation d'un logotype ou d'un motif décoratif.

Le moule (1) présente des perforations traversantes permettant d'appliquer à travers un plateau (4) une dépression à l'aide d'une pompe à vide (5).

Les perforations sont réparties à la surface du moule, et sont localisées préférentiellement dans les zones où le moule présente des cavités importantes. L'espacement des perforations est compris entre un et cinq centimètres.

La section des perforations est inférieure à un millimètre.

La continuité de la dépression résulte de la porosité du revêtement en cuir naturel (6).

Une alternative consiste à réaliser un moule en résine microporeux chargée en aluminium ou en mousse métallique microporeuse tel que de l'aluminium poreux METAPOR (marque déposée).

Le moule (1) présente des protubérances (7, 8) pour la fixation du revêtement en cuir naturel (6). Ces protubérances sont constituées de picots permettant de fixer le revêtement en cuir naturel présentant des trous permettant de fixer le revêtement en cuir naturel de manière tendue.

La fixation peut aussi être réalisée par un adhésif temporaire.

Le revêtement en cuir naturel (6) est un matériau souple et poreux. Il peut être constitué par une feuille de cuir naturel ou artificiel d'une épaisseur comprise entre 0,4 et 5 millimètres, d'un tissu, ou d'un complexe textile.

La feuille thermoplastique (3) est supportée par un cadre de serrage (9). Elle est constituée par un matériau, de préférence avec un faible taux de dégagement de gaz nocifs, tel que :
- ABS (Acrylonitrile Butadiène Styrène)
- PETG (Polyéthylène Téréphtalate Glycol)
- PMMA (Polyméthacrylate de Méthyle)
- Polycarbonate.

Selon l'application visée, la feuille thermoplastique est transparente, translucide ou opaque.

La feuille peut être colorée dans la masse.

L'épaisseur est comprise entre 0,5 millimètres et 10 millimètres selon l'application visée.

Le chauffage est assuré par une tête de chauffage par exemple avec des radiants (10) infrarouge ou des éléments céramiques, de type connu.

Pour des matériaux très épais, il peut être nécessaire de prévoir une deuxième tête de chauffage disposée du coté opposé de la feuille thermoformable (3).

La mise en œuvre comporte une première étape où le moule (1) est écarté du cadre (2) de support de la feuille thermoformable.

On fixe le revêtement en cuir naturel (6) préalablement encollé sur les moyens de fixation (7, 8) du moule (1). L'encollage est réalisé par dépôt d'une surface de colle thermoréactivable.

On fixe également la feuille thermoplastique (3) sur le cadre de serrage (9).

Lorsque les différents constituants sont mis en place, on procède à la mise en température de la feuille thermoplastique (3).

Lorsque la feuille (3) a atteint sa température de plasticité, on déplace le moule (1) en direction du cadre de serrage (9), jusqu'à ce que la surface du revêtement en cuir naturel (6) vienne en contact avec la surface de la feuille thermoplastique (3), et on applique une dépression au moule (1). Cette dépression provoque l'application de la feuille thermoplastique (3) contre le revêtement en cuir naturel (6), l'ensemble épousant la surface du moule (1) pour reproduire la configuration de l'empreinte gravée sur le moule.

Lorsque le revêtement en cuir naturel présente des ajourements, la feuille thermoplastique (3) est localement aspirée à travers le revêtement en cuir naturel pour venir affleurer la surface extérieure du revêtement en cuir naturel.

La dépression de l'ordre de 0,4 à 1 bar est appliquée pendant quelques dizaines de secondes.

Ensuite, on insuffle de l'air frais pendant quelques minutes, afin d'assurer le refroidissement de la pièce.

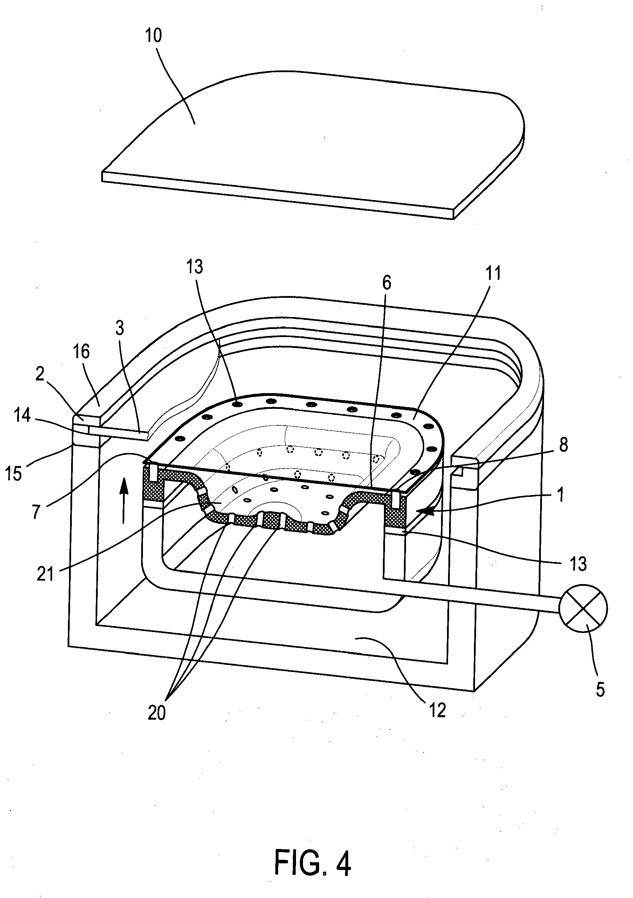

La figure 4 représente une vue détaillée, en coupe partielle, d'une installation pour la mise en œuvre du procédé.

Le moule (1) est constitué par une pièce rigide présentant une surface (21) représentant la surface de la pièce à réaliser. Cette surface (21) est traversée par des orifices d'aspiration (20) réparties sur la surface avec une densité plus importante dans les zones présentant des modifications de courbure plus importantes.

Ce moule (1) présente une bordure périphérique supérieure (11) d'une largeur d'environ 20 millimètres, débordant de la section de la pièce à réaliser. Cette bordure périphérique supérieure (11) présente des picots (7, 8) d'une section d'environ 5 millimètres, et d'une hauteur supérieure à l'épaisseur de la feuille de cuir.

L'espacement de ces picots est typiquement compris entre une dizaine de millimètres et une centaine de millimètres. Il est recommandé de prévoir sur tous les cotés du moule plus de deux picots, pour éviter la déformation sous forme de flèche sur les cotés les plus longs.

Ces picots (7, 8) sont espacés régulièrement sur la périphérie, avec un rapprochement dans les zones présentant des rayons de courbure faible. Ils sont destinés la feuille de cuir (6) tendue mais non étiré. La feuille de cuir (6) présente des trous d'une section égale à la section des picots (7, 8) implantés de manière strictement homologue à l'implantation des picots (7, 8), sur tout le pourtour de la feuille de cuir (6) et sur une bordure périphérique d'une largeur d'environ 20 millimètres, entourant la surface correspondant à la section transversale de la pièce à réaliser.

Par « tendu mais non étiré », on entend que la feuille de cuir, une fois en place, est maintenue plane, au repos, sans qu'il n'y ait de mise sous tension par étirement de la feuille. La feuille est mise en place en faisant glisser en force chacune des zones perforées sur le picot correspondant, l'étirement étant alors purement locale dans la périphérie directe du trou engagé sur le picot, sans que l'on exerce de traction selon une direction transversale de la feuille.

La géométrie de la feuille (6) après mise en place sur le moule (1) est identique à la géométrie de la feuille avant sa mise en place.

En particulier, la feuille (6) ne présente après sa mise en place ni plissure, ni extension selon une quelconque direction.

Le moule (1) est, dans l'exemple décrit, associé de manière étanche à une embase (12) reliée à une pompe à vide (5). Un joint (13) périphérique assure l'étanchéité de l'ensemble.

Cette embase est mobile verticalement, par rapport au cadre (2) destiné à recevoir la feuille thermoplastique. Ce cadre est un cadre rigide, délimitant une zone évidée (13) dont la section correspond sensiblement à la section extérieure du moule (1) de façon à permettre l'engagement autour de ce moule (1) et notamment de sa bordure supérieure (7) lorsque l'embase est actionnée dans un mouvement relatif rapprochant le moule (1) du cadre (2).

La feuille de plastique thermoformable (3) est mise en place par pincement dans une rainure périphérique (14). A cet effet, le cadre peut être constitué de deux serre-flancs (15, 16) articulées entre une position d'ouverture où la feuille thermoplastique peut être engagée dans le cadre (2) et une position de travail où les deux parties sont resserrées sur la bordure périphériques de la feuille thermoplastique (3) pour la maintenir fermement.

Le dispositif de chauffage (10) est constitué par un plateau chauffant mobile entre une position proche du cadre, où il assure la mise en température de la feuille thermoplastique (3). A cette phase, le moule (1) est éloigné du cadre (2) afin d'éviter de chauffer la feuille de cuir (6). Lorsque la feuille est ramollie pour présenter une ductilité appropriée, le dispositif de chauffage (10) est éloigné du cadre (2) et de la feuille thermoplastique.

La feuille thermoplastique est formée par un polymère tel que l'acrylonitrile butadiène styrène (ABS), le polyéthylène (PE), le polystyrène choc (HIPS), le polychlorure de vinyle (PVC), le polyméthacrylate de méthyle (PMMA), le polycarbonate (PC), le polypropylène (PP) et le polystyrène (PS) ou encore une association de plusieurs polymères (ABS-PMMA, PS-PE).

La feuille de cuir (6) a été préalablement revêtue d'une colle thermoactivable, de préférence réactivable à une température comprise entre 100 et 140°C et de préférence d'environ 120°C. De préférence, la colle est appliquée seulement sur le cuir, sur la totalité de sa surface, et pas sur la feuille thermoplastique.

Le déplacement du moule (1) en direction du cadre (2) conduit à la mise en contact de la feuille thermoplastique (3) ramollie et chaude avec la surface encollée du cuir (6), ce qui provoque l'activation de la colle par l'apport thermique de la feuille, et le collage. Parallèlement, l'aspiration produite par l'intermédiaire des orifices (20) se propage à travers le cuir dont la porosité relative transmet le vide dans l'espace compris entre la feuille thermoplastique (3) et le cuir (6), pour assurer un placage précis des deux surfaces en contact.

La déformation de la feuille thermoplastique (3) est assurée par le vide qui se créé entre la feuille de cuir et la feuille thermoplastique (6) exclusivement, sans que l'on réalise une déformation complémentaire par une matrice venant en appui sur la surface extérieure de la feuille thermoplastique (3), et sans apport d'une pression d'air positive sur la surface extérieure. Ceci permet d'assurer un positionnement très précis des surfaces en contact, sans déformation géométrique de l'une des surfaces par rapport à l'autre.

Cette installation permet de réaliser des pièces hybrides plastique/cuir de grande qualité, avec un matériau, le cuir naturel, qui est une matière plus ou moins homogène dans son épaisseur et son élasticité. Contrairement aux solutions de l'art antérieur, l'installation assure un maintien ferme et de manière tendue sur le cadre, alors que le brevet antérieur US6685789 prévoyait une souplesse, avec le système des ressorts pour "accompagner" la déformation. Cette solution n'est pas favorable, particulièrement si le cuir est ajouré dans le but d'un décor intégrant la matière plastique, car ce motif doit être placé très précisément sur la forme du moule. S'il y a une souplesse dans les fixations, le placement du motif ne sera pas précis, et cela est important également s'il y avait un simple décor imprimé sur le cuir.

Par ailleurs, il n'y a aucun intérêt à préchauffer le cuir, contrairement à ce qui est enseigné dans l'art antérieur.

L'encollage du cuir au préalable est indispensable, avec une colle thermoréactivable, et le simple contact avec le plastique chaud pendant le processus de thermoformage permet de réactiver la colle, sans qu'il ne soit nécessaire de préchauffer le décor.

Le rajout d'une multitude de perforations dans le moule et la proximité des perforations dans le moule est indispensable pour un bon rendu et permet aussi de compenser la non homogénéité en élasticité et épaisseur de la matière cuir.

## Revendications

1. Procédé de fabrication d'une pièce rigide revêtue au moins partiellement par un revêtement en cuir naturel (6) en cuir naturel, comportant une étape de chauffage d'une feuille thermoplastique (3), une étape d'application dudit revêtement en cuir naturel (6) contre ladite feuille (3) et une étape de conformation de l'ensemble ainsi formé par application d'une dépression, tel que
- ledit revêtement en cuir naturel (6) est préalablement encollé par une colle thermo-activable et fixé périphériquement sur un moule (1) présentant des orifices d'aspiration en position tendue non étirée, la fixation du revêtement en cuir naturel (6) en cuir sur le moule étant réalisée par l'intermédiaire de picots disposés à la surface d'une zone périphérique du moule, et par des perçage pratiqués dans la bordure périphérique du revêtement en cuir naturel (6) selon des implantations correspondant à l'implantation desdits picots,
- ladite étape d'application consiste à rapprocher ledit moule (1) de ladite feuille thermoplastique (3) préalablement mise en température de plasticité, afin de mettre en contact la surface dudit revêtement en cuir naturel (6) avec la surface de ladite feuille thermoplastique (3),
- ladite étape d'application étant suivie par une étape de mise en dépression pour forcer l'ensemble formé par le revêtement en cuir naturel (6) et la feuille thermoplastique (3) adjacente à épouser la surface du moule (1).

2. Procédé selon la revendication 1, **caractérisé en ce que** ladite étape de dépression est réalisée en l'absence de toute action mécanique exercée sur la surface de la feuille thermoplastique (3).

3. Procédé selon la revendication 1, **caractérisé en ce que** ledit revêtement en cuir naturel présente des ajourements pour le passage local de la feuille thermopastique lors de l'étape de mise en dépression.

4. Procédé selon la revendication 1, **caractérisé en ce que** ledit moule présente des configurations dont le rayon de courbure, dans un plan perpendiculaire au revêtement en cuir naturel, est inférieur à l'épaisseur dudit revêtement en cuir naturel.

5. Procédé selon la revendication 1, **caractérisé en ce que** ladite feuille thermoplastique est maintenue par un cadre périphérique présentant une ouverture supérieure à la section transversale du moule.

6. Procédé selon la revendication 1, **caractérisé en ce qu'**il comporte en outre une étape de préformage de la feuille thermoplastique consistant à appliquer un poinçon sur la surface de la feuille thermoplastique opposée au revêtement en cuir naturel, après l'étape de chauffage.

7. Procédé selon la revendication 1, **caractérisé en ce qu'**il comporte en outre une étape d'inclusion d'un matériau entre la feuille thermoplastique et le revêtement en cuir naturel.

8. Procédé selon la revendication 1, **caractérisé en ce que** l'étape de chauffage de la feuille thermoplastique (3) est réalisée lorsque le cadre (2) supportant ladite feuille thermoplastique (3) est en position écartée du moule supportant le revêtement (6) en cuir naturel, et **en ce que** les moyens de chauffage sont écartés dudit cadre (2) avant l'étape de rapprochement entre ledit cadre (2) et ledit moule (1).

## Patentansprüche

1. Verfahren zur Herstellung eines starren Teils, das mindestens teilweise mit einer Naturlederbeschichtung (6) aus Naturleder beschichtet ist, aufweisend einen Schritt des Erhitzens einer thermoplastischen Folie (3), einen Schritt des Aufbringens der Naturlederbeschichtung (6) auf die Folie (3) und einen Schritt des Ausbildens der derart gebildeten Einheit durch Anwenden eines Unterdrucks, derart, dass
- die Naturlederbeschichtung (6) zunächst mit einem wärmeaktivierbaren Klebstoff verklebt und peripher auf einer Form (1), die Saugöffnungen aufweist, in gespannter, nicht gedehnter Position befestigt wird, wobei die Befestigung der Naturlederbeschichtung (6) aus Leder auf der Form mittels Stiften erfolgt, die auf der Oberfläche einer peripheren Zone der Form angeordnet sind, und mittels Löchern, die in den peripheren Rand der Naturlederbeschichtung (6) an Stellen ausgeführt sind, die den Stellen der Stifte entsprechen,
- der Schritt des Aufbringens darin besteht, die Form (1) an die zuvor auf Plastizitätstemperatur gebrachte thermoplastische Folie (3) anzunähern, um die Oberfläche der Naturlederbeschichtung (6) mit der Oberfläche der thermoplastischen Folie (3) in Kontakt zu bringen,
- dem Schritt des Aufbringens ein Schritt des Inunterdruckversetzens folgt, um die von der Naturlederbeschichtung (6) und der anliegenden thermoplastischen Folie (3) gebildete Einheit zu zwingen, sich an die Oberfläche der Form (1) anzuschmiegen.

2. Verfahren nach Anspruch 1, **dadurch gekennzeichnet, dass** der Unterdruckschritt bei Abwesenheit jedweder auf die Oberfläche der thermoplastischen Folie (3) ausgeübten mechanischen Aktion durchgeführt wird.

3. Verfahren nach Anspruch 1, **dadurch gekennzeichnet, dass** die Naturlederbeschichtung Durchbrüche für den lokalen Durchgang der thermoplastischen Folie während des Schritts des Inunterdruckversetzens aufweist.

4. Verfahren nach Anspruch 1, **dadurch gekennzeichnet, dass** die Form Konfigurationen aufweist, deren Krümmungsradius in einer Ebene senkrecht zur Naturlederbeschichtung kleiner als die Dicke der Naturlederbeschichtung ist.

5. Verfahren nach Anspruch 1, **dadurch gekennzeichnet, dass** die thermoplastische Folie von einem peripheren Rahmen mit einer Öffnung gehalten wird, die größer als der Querschnitt der Form ist.

6. Verfahren nach Anspruch 1, **dadurch gekennzeichnet, dass** es ferner einen Schritt des Vorformens der thermoplastischen Folie umfasst, der darin besteht, nach dem Schritt des Erhitzens einen Stempel auf die Oberfläche der thermoplastischen Folie gegenüber der Naturlederbeschichtung aufzubringen.

7. Verfahren nach Anspruch 1, **dadurch gekennzeichnet, dass** es ferner einen Schritt des Einschlusses eines Materials zwischen der thermoplastischen Folie und der Naturlederbeschichtung umfasst.

8. Verfahren nach Anspruch 1, **dadurch gekennzeichnet, dass** der Schritt des Erhitzens der thermoplastischen Folie (3) ausgeführt wird, wenn sich der Rahmen (2), der die thermoplastische Folie (3) trägt, in beabstandeter Position zur Form befindet, die die Naturlederbeschichtung (6) trägt, und dass die Heizmittel vor dem Schritt des Annäherns zwischen dem Rahmen (2) und der Form (1) zum Rahmen (2) beabstandet sind.

## Claims

1. Method for producing a rigid part at least partly covered by a natural leather covering (6) made of natural leather, comprising a step of heating a thermoplastic sheet (3), a step of applying said natural leather covering (6) to said sheet (3) and a step of shaping the assembly thus formed by applying a vacuum, such that
- said natural leather covering (6) is previously glued by means of a heat-activatable adhesive and fixed peripherally on a mold (1) having suction openings in a taught unstretched position, the fixing of the natural leather covering (6) made of leather on the mold being carried out by means of pins arranged on the surface of a peripheral zone of the mold, and by holes made in the peripheral edge of the natural leather covering (6) according to layouts corresponding to the layout of said pins,
- said application step consists in bringing said mold (1) together with said thermoplastic sheet (3) previously heated to a temperature of plasticity, in order to bring the surface of said natural leather covering (6) into contact with the surface of said thermoplastic sheet (3),
- said application step being followed by a step of applying a vacuum in order to force the assembly formed by the natural leather covering (6) and the adjacent thermoplastic sheet (3) to mold to the surface of the mold (1).

2. Method according to claim 1, **characterized in that** said vacuum step is carried out in the absence of any mechanical action exerted on the surface of the thermoplastic sheet (3).

3. Method according to claim 1, **characterized in that** said natural leather covering has recesses for the local passage of the thermoplastic sheet during the step of applying a vacuum.

4. Method according to claim 1, **characterized in that** said mold is designed such that the radius of curvature, in a plane perpendicular to the natural leather covering, is less than the thickness of said natural leather covering.

5. Method according to claim 1, **characterized in that** said thermoplastic sheet is held by a peripheral frame having an opening greater than the cross section of the mold.

6. Method according to claim 1, **characterized in that** it further comprises a step of preforming the thermoplastic sheet that consists in applying a punch on the surface of the thermoplastic sheet opposite to the natural leather covering, after the heating step.

7. Method according to claim 1, **characterized in that** said method further comprises a step of including a material between the thermoplastic sheet and the natural leather covering.

8. Method according to claim 1, **characterized in that** the step of heating the thermoplastic sheet (3) is carried out when the frame (2) supporting said thermoplastic sheet (3) is in a position away from the mold supporting the natural leather covering (6), and **in that** the heating means are removed from said frame (2) before the step of bringing said frame (2) and said mold (1) together.
